# EUROPEAN PATENT APPLICATION

(11) **EP 2 229 819 A2**
(43) Date of publication of application: **22.09.2010**
(21) Application number: 10002793.7
(22) Date of filing: 17.03.2010
(51) Int. Cl.: A23G 7/00, B65D 75/10, B65D 85/60, B65D 75/20

(54) **Method and apparatus to facilitate encapsulating an edible substance**

(30) Priority: 20.03.2009 US 408513
(71) Applicant: Kraft Foods Global Brands LLC, Northfield, IL 60093 (US)
(72) Inventor: Stoppello, Valeria, Pacheco, Argentina 1617 (AR); De Sa Botelho Pinto, Claudine, 82010-340 Brazil (BR); Morales Duarte, Camila, Curitiba 81210-310 (BR); Exner, Ronald, H., 82057 Icking (DE)
(74) Representative: HOFFMANN EITLE

(57) **Abstract**

An apparatus is provided comprising an edible substance, a discrete sheet of flexible film, and an adhesive disposed on the flexible film in a pattern that surrounds an adhesive-free space that is sized to accommodate the edible substance. The adhesive preferably does not extend to at least one edge of the flexible film. Portions of the adhesive contact other portions of the adhesive such that the discrete sheet encapsulates the edible substance, and the discrete sheet is twisted in at least one area that includes the adhesive.

## Description

### Technical Field

This invention relates generally to the wrapping of edible consumables.

### Background

It is known in the art that edible substances, such as candies, may be individually packaged for sale. A known packaging method involves wrapping the edible substances in a flexible material that may be twisted at opposing ends to secure the edible substance between those ends. It is also known to use a twist tie to hold a twisted opposing end shut and further secure the edible substance within the flexible material, especially where the flexible material tends to untwist itself. Other methods create a full or partial seal around the edible substance through use of adhesives. Both hot and cold-sealing adhesives are known, and may provide nearly hermetic seals depending upon the adhesive configuration. In many cases, the individually packaged edible substances are combined in an additional sealed secondary packaging such as a bag or overwrap. This secondary packaging provides another layer of protection to the edible substances from the ingress of moisture, especially where the seal of the individual package is not hermetic.

For some purposes, these prior art practices are adequate and acceptable. However, they do not fully address all application settings that are of interest. For example, merely twisting one or more ends does not result in a hermetically sealed package, which is highly desirable for many food-based applications. On the other hand, when a hermetic seal is achieved, for example through use of adhesives, the packages are often hard for the consumer to open. Additionally, the wrapper is often torn or destroyed by the consumer when trying to open such a sealed package. This may be undesirable where the consumer wishes to save the package or to rewrap part or all of the edible substance in the original wrapper.

Attempts have been made to overcome some of these problems. For instance, to allow sealed packaging to open more easily, a tearing aid is often added to the packaging. The tearing aid essentially gives the consumer a starting point to rip the package to more easily access the edible substance. However, in many cases, once a consumer opens the package by using the tearing aid, the package may no longer be used to rewrap part or all of the edible substance, or otherwise saved. The tearing aid also requires the use of additional equipment to create the tear. This increases manufacturing time and costs. It also introduces the possibility that the seal will be inadvertently cut, thereby destroying hermeticity, or that the edible substance itself will be cut or otherwise punctured.

### Brief Description of the Drawings

The above needs are at least partially met through provision of the method and apparatus to facilitate encapsulating an edible substance described in the following detailed description, particularly when studied in conjunction with the drawings, wherein:

FIG. 1 comprises a flow chart as configured in accordance with various embodiments of the invention;

FIG. 2 comprises a schematic view as configured in accordance with various embodiments of the invention;

FIG. 3 comprises a schematic view as configured in accordance with various embodiments of the invention;

FIG. 4 comprises a schematic view as configured in accordance with various embodiments of the invention;

FIG. 5 comprises a schematic view as configured in accordance with various embodiments of the invention;

FIG. 6 comprises a schematic view as configured in accordance with various embodiments of the invention;

FIG. 7 comprises a schematic view as configured in accordance with various embodiments of the invention;

FIG. 8 comprises a schematic view as configured in accordance with various embodiments of the invention;

FIG. 9 comprises a schematic view as configured in accordance with various embodiments of the invention;

FIG. 10 comprises a schematic view as configured in accordance with various embodiments of the invention;

FIG. 11 comprises a schematic view as configured in accordance with various embodiments of the invention;

FIG. 12 comprises a schematic view as configured in accordance with various embodiments of the invention;

FIG. 13 comprises a schematic view as configured in accordance with various embodiments of the invention;

FIG. 14 comprises a schematic view as configured in accordance with various embodiments of the invention;

FIG. 15 comprises a schematic view as configured in accordance with various embodiments of the invention; and

FIG. 16 comprises a schematic view as configured in accordance with various embodiments of the invention.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. It will further be appreciated that certain actions and/or steps may be described or depicted in a particular order of occurrence while those skilled in the art will understand that such specificity with respect to sequence is not actually required. It will also be understood that the terms and expressions used herein have the ordinary technical meaning as is accorded to such terms and expressions by persons skilled in the technical field as set forth above except where different specific meanings have otherwise been set forth herein.

### Detailed Description

Generally speaking, pursuant to these various approaches, an apparatus is provided comprising an edible substance, a discrete sheet of flexible film, and an adhesive disposed on the flexible film in a pattern that surrounds an adhesive-free space that is sized to accommodate the edible substance. The adhesive does not extend to at least one edge of the flexible film. Portions of the adhesive contact other portions of the adhesive such that the discrete sheet encapsulates the edible substance, and the discrete sheet is twisted in at least one area that includes the adhesive.

By one approach, the adhesive pattern is at least partially arcuate in shape. By another approach, the adhesive pattern is substantially oval-shaped. The discrete sheet may be folded about the edible substance to form a folded edge. The outer edges of the discrete sheet that are opposite the folded edge may overlap unevenly to facilitate opening the apparatus without destroying the discrete sheet. By another approach, the ends of the discrete sheet may be twisted, and a tie may optionally be used.

So configured, edible substances may be economically and efficiently wrapped, shipped, and offered to the consumer in packaging that resembles the traditional appearance of such edible substances (thus preserving considerable emotional goodwill). These teachings may be implemented using existing deployed technology. These teachings may also be scaled to accommodate single or multiple portions, and varying sizes of edible substances. These teachings will readily accommodate using a hermetic seal, thereby affording the edible substance improved shelf life without the need for an additional, secondary package. At the same time, the apparatus may be configured to resemble the typical double-twist package encountered in the market and expected and anticipated by many consumers, while providing the consumer easier access to the edible substance without ripping or destroying the package. This allows the consumer to reclose the package (although hermeticity is not necessarily maintained) so part or all of the edible substance may be saved in it after initially opening the wrapper, or to save the packaging after consumption. At the same time, the apparatus may be configured such that evidence of tampering is readily detectable.

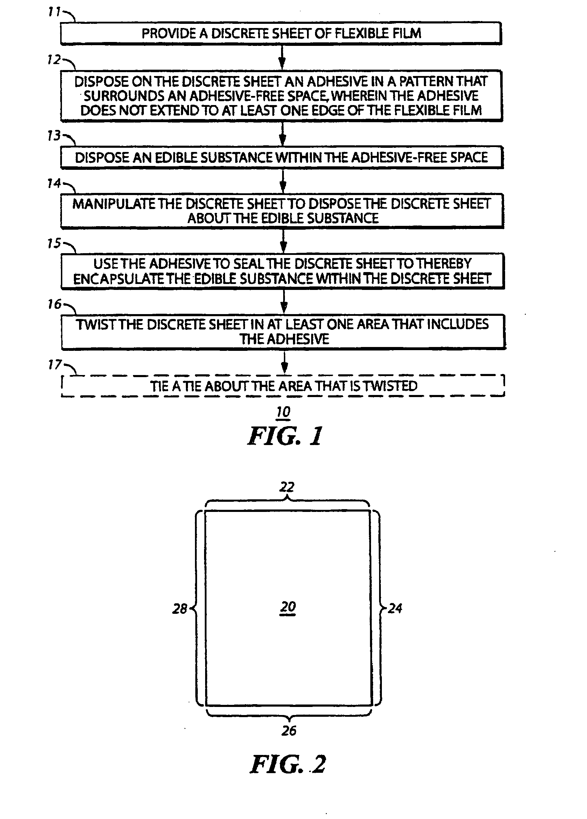

These and other benefits may become clearer upon making a thorough review and study of the following detailed description. Referring now to the drawings, and in particular to the flow chart in FIG. 1, in this process 10, a discrete sheet of flexible film is provided 11. The discrete sheet 20 is shown in FIG. 2. The discrete sheet 20 has edges 22, 24, 26 and 28. The discrete sheet 20 may be comprised of any material suitable for wrapping edible substances. For example, it may comprise a barrier film or coating with a high level of impermeability to moisture ingress to preserve the freshness of the edible substance contained within it.

The level of impermeability that is acceptable will vary based upon the edible substance contained within the discrete sheet, as well as the ratio of packaged surface area of a product to volume of the product. Impermeability may be measured, for instance, using the water vapor transmission rate of ASTM (American Society for Testing and Materials) test method F1249-90, measured at 38°C and 85% relative humidity. By one approach, a barrier film with a water vapor transmission rate of less than about 1 mg/m²/day is used to wrap a product such as a bon-bon. However, where a product larger than a bon-bon is wrapped, or where the product has a lower surface area to volume ratio, a water vapor transmission rate as high as 5 mg/m²/day may be acceptable. By another approach, a product that is fairly insensitive to moisture may tolerate a water vapor transmission rate of about 10 mg/m²/day or higher.

These barrier films or coatings may be monofilms, laminates, waxes, paper, cast films, biaxially-oriented polyester films, biaxially-oriented polypropylene films, high-density polyethylene (HDPE) films, low-density polyethylene (LDPE) films or the like. The type of barrier used may be product-dependent. A laminate may also serve a decorative function in addition to (or in place of) a barrier function. In one embodiment, the discrete sheet 20 comprises a metallic laminate. (Those skilled in the art will recognize and understand that these examples are intended to serve only in an illustrative capacity and are not intended to comprise an exhaustive listing of all possibilities in these regards.)

The discrete sheet 20 may optionally also be comprised of a material with dead fold characteristics. Dead fold is a term used to describe the ability of a material to take and hold a fold without springing back to its original form. Materials may be used that cover a spectrum of dead fold properties. For instance, aluminum foil has excellent dead fold capabilities while polypropylene has little to no dead fold. Those skilled in the art will appreciate that the material selected will vary based upon the objectives to be achieved.

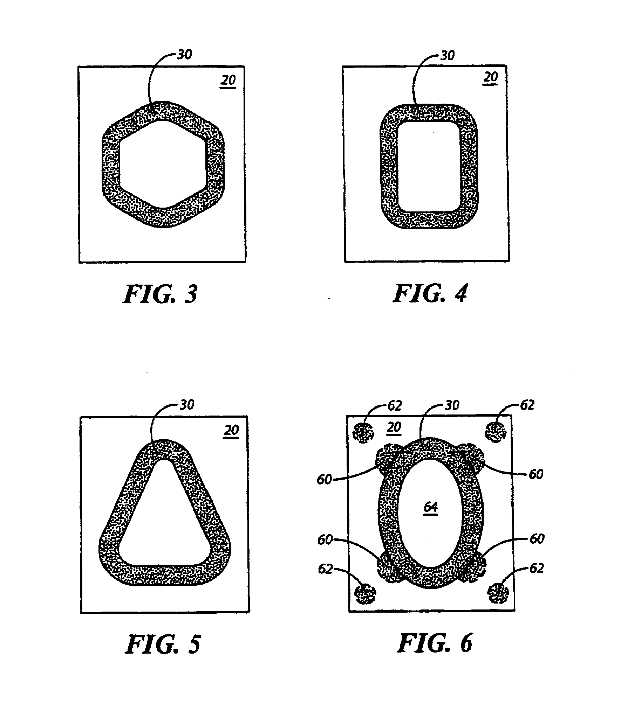

Referring again to FIG. 1, an adhesive is disposed 12 on the discrete sheet in a pattern that surrounds an adhesive-free space, such that the adhesive does not extend to at least one edge of the discrete sheet of flexible film. In a particular illustrative example, the pattern of adhesive 30 does not extend to two opposing edges (i.e., 22 and 26, or 24 and 28). By one approach, the pattern of adhesive 30 does not extend to any of the four edges 22, 24, 26, and 28, as shown in FIGS. 3-6.

The adhesive may be any known in the art, such as a cold-sealing adhesive, a heat-sealing adhesive, a pressure-sensitive adhesive (permanent or non-permanent), and the like. For the purposes of this illustrative example, and without intending any limitations in these regards, it will be presumed here that a cold-sealing adhesive is used. The cold-sealing adhesive may be natural latex rubber-based or synthetic. Using synthetic adhesive avoids complications arising from latex allergies if there is contact with the edible substance; however, either type of cold-sealing adhesive is acceptable. The cold-sealing adhesive is pressure-responsive (i.e., the adhesive will bond when placed under pressure), and may comprise an adhesive component and an elastomer as well as other additives. By one approach, the adhesive may comprise a reclosable adhesive. Cold-sealing adhesives comprising a relatively high rubber content and a relatively low polymer content may be especially useful for certain application settings of interest.

As will be well understood by those skilled in the art, the application of the adhesive to the discrete sheet will vary depending upon the type of adhesive used. By one approach, a cold-sealing adhesive is disposed upon the discrete sheet through use of a disposing film with release properties or by applying a release material on the disposing film itself. By one approach, about 1 g/m² of release material may be used.

Where a reclosable adhesive is desired, a primer may be applied to part or all of the flexible film prior to applying the cold seal adhesive. By one approach, about 0.2 g/m² of primer is applied. By another approach, a flame or corona treatment is carried out on the flexible film prior to applying the cold-sealing adhesive. Both approaches improve anchorage of the seal, ensuring that the cold seal adhesive suitably bonds to the flexible film. The reclosability of the adhesive may also be modified from fully reclosable, to partially reclosable, to not reclosable at all.

The weight of adhesive applied per area may also vary. By one approach, the weight of adhesive per area may be about 2.5 g/m² to about 8 g/m². By another approach, the weight of adhesive per area may be about 4 g/m² to about 6 g/m².

The specific shape of the pattern of adhesive 30 may vary. By one approach, the pattern of adhesive 30 is at least partially arcuate. The partially arcuate nature of the pattern of adhesive 30 uses less adhesive than, for example, a pattern of transverse and perpendicular strips of adhesive, thus reducing costs. As one non-limiting example in these regards, the pattern of adhesive 30 is substantially oval-shaped as seen in FIG. 6. The pattern of adhesive 30 may be approximately 10 mm to approximately 25 mm in width. By one approach suitable for many application settings of interest, the pattern is approximately 15 mm in width. As will be well understood by those skilled in the art, the width of the adhesive may vary based on factors such as the desired tightness of the seal or the amount and/or size of the edible substance disposed within the flexible film. For instance, a smaller-sized edible substance may require a smaller width of adhesive, while a large-sized edible substance or an apparatus encapsulating a plurality of edible substances may require a larger width of adhesive.

Referring now to FIG. 6 in particular, the pattern of adhesive 30 may also optionally include one or more additional areas of adhesive 60 on the outer edges of the pattern of adhesive 30. The additional areas of adhesive 60 may provide another sealing point to increase the sealing area and thus the effectiveness (and hermeticity) of the seal. By one approach, these additional areas of adhesive 60 are substantially shaped as half circles. The additional areas of adhesive 60 may be approximately 3.5 cm² to 5 cm². Generally speaking, additional areas of less than approximately 2 cm² do not noticeably increase the strength or integrity of the seal, while additional areas of greater than 6 cm² typically results in wasted adhesive without additional benefit. By one approach, additional areas of adhesive substantially-shaped as half circles with areas of approximately 4.35 cm² may be used.

By another approach, one or more second additional areas of adhesive 62 may be placed in one or more corners of the discrete sheet 20. These second additional areas of adhesive 62 enhance the twist-wrapping process by providing another area that seals when pressure is applied by the twist. Those skilled in the art will recognize that different shapes may be used in other approaches to maximize the seal strength and integrity in the same manner as described here.

Regardless of the particular pattern of adhesive 30 employed, the pattern defines an adhesive-free space 64 that is sized to accommodate an edible substance. The size of the adhesive-free space 64 will vary in relation to the pattern of adhesive 30, and the shape, size, and/or quantity of edible substance used. The adhesive-free space 64, however, should be sized such that the pattern of adhesive 30 does not contact the edible substance when wrapped. By one approach, an oval-shaped pattern of adhesive 30 defines an adhesive-free space 64 that is approximately 55 cm² to 62 cm² in area. As a more specific, non-limiting example of interest, the oval-shaped pattern defines an adhesive-free space 64 of approximately 58.8 cm² in area.

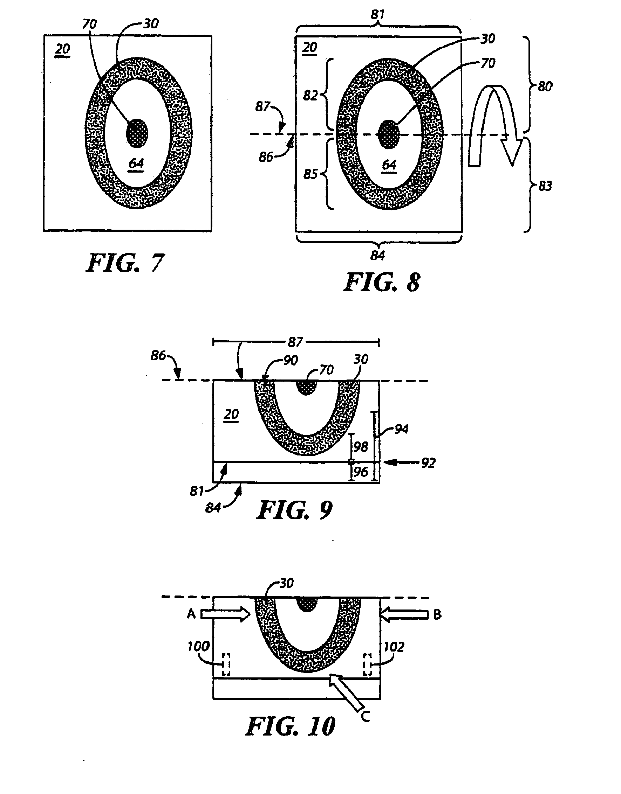

Referring again to FIG. 1, an edible substance is disposed 13 within the adhesive-free space. An edible substance 70 disposed within the adhesive-free space 64 is illustrated in FIG. 7. The edible substance 70 may comprise one or more pieces. The edible substance 70 may be disposed anywhere within the adhesive-free space 64, so long as it remains out of contact with the pattern of adhesive 30 when wrapped. This determination will be dependent upon the size, shape and/or quantity of edible substance 70 disposed within the adhesive-free space 64. In FIG. 7, a substantially circular edible substance 70 is disposed in the center of the adhesive-free space 64. However, an elongated or irregularly-shaped edible substance or the presence of a plurality of edible substances may require different placement. There are various known approaches to placing an edible substance in such a manner. As these approaches are already known in the art, for the sake of brevity, further description here in these regards will not be presented.

The edible substance 70 may comprise one or more confectionaries, candies, bonbons, chocolates, truffles and the like, or any combination thereof. In a particular example of interest, the edible substance 70 comprises a bon-bon (which itself comprises a bite-size sweet morsel that often comprises a fairly rigid shell with a tasty filling).

With reference again to FIG. 1, once the edible substance has been disposed within the adhesive-free space, the discrete sheet is manipulated 14 to dispose the discrete sheet about the edible substance. As shown in FIG. 8, the discrete sheet 20 is schematically separated into an upper portion 80 and a lower portion 83. The upper portion 80 comprises a top edge 81 and an upper portion of adhesive 82. The lower portion 83 comprises a bottom edge 84 and a lower portion of adhesive 85. The top edge 81 is folded about an axis 86 toward the bottom edge 84, forming a folded edge 87 along the axis 86, and opposite the top and bottom edges 81 and 84. By one approach, if desired, the top edge 81 is folded about the axis 86 toward the bottom edge 84 to form the folded edge 87. In an alternative approach, if desired, the side edges may instead be folded about an axis perpendicular to the axis 86 illustrated in FIG. 8.

As illustrated in FIG. 9, after manipulation, the discrete sheet 20 encapsulates the edible substance 70 within the adhesive-free space 64. The upper and lower portions of adhesive 82 and 85 form an adhesive contact area 90. The adhesive contact area 90 does not have to become an exact half of the adhesive pattern 30, i.e., the upper and lower portions of adhesive 82 and 85 do not have to precisely overlap. However, the edible substance 70 preferably remains in the adhesive-free space 64 and substantially or entirely out of contact with the adhesive contact area 90.

By one approach, and if so desired, during manipulation the top edge 81 and the bottom edge 84 may be folded to form an uneven overlap 92. The uneven overlap 92 creates an excess portion 94 of the discrete sheet 20 that the consumer may more readily grasp and manipulate. The excess portion 94 has a first portion 96 and a second portion 98. The first and second portions 96 and 98 are each long enough for a consumer to grasp partially with their fingers. By separately grasping the first and second portions 96 and 98, the consumer may easily peel apart the upper portion of adhesive 82 from the lower portion of adhesive 85 to access the edible substance 70. In a particular approach, the first portion 96 is longer than the second portion 98 to further enable the consumer to firmly grasp the first and second portions, and easily pull apart the upper and lower portions of adhesive 82 and 85.

The excess portion 94 also avoids the need for a tearing aid. When the adhesive extends to the edges of the discrete sheet, there is not an excess portion (or very little excess portion) for a consumer to grasp to pull open the sealed wrapper. To assist in opening, a tearing aid, such as a notch, tab, or cut, is often added to the wrapper. The tearing aid essentially gives the consumer a starting point to rip open the rest of the wrapper to access the edible substance contained within it. As a result, the consumer cannot save the wrapper or rewrap part or all of the edible substance once the wrapper has been opened. The uneven overlap 92 and excess portion 94 avoid these problems.

Referring again to FIG. 1, the adhesive is used to seal 15 the discrete sheet and thereby encapsulate the edible substance within the discrete sheet. By one approach, the substance is encapsulated through use of a cold-seal adhesive. As shown in FIG. 10, a seal may be created by applying pressure to the pattern of cold-sealing adhesive 30 in one or more sealing areas, A, B and C. Pressure may be applied through the use of any conventional mechanism, such as a jaw, clamp, pad, fingers, crimper, seal bar, or the like. The pressure applied may vary from about 1 psi to about 35 psi. As one non-limiting illustrative example in these regards, about 20 psi of pressure is applied by a seal bar at room temperature and may typically be applied from about 0.1 seconds to 0.2 seconds.

By one approach, pressure may be applied to each sealing area, A, B, and C as shown in FIG. 10. By another approach, pressure may be applied to sealing areas A and B. If desired, and as another example in these regards, pressure is applied only to sealing area C, between the registration marks denoted by reference numerals 100 and 102. If additional areas of adhesive 60 are present, they also will become sealed upon application of pressure, further increasing seal hermeticity and integrity. One skilled in the art will recognize that when using other adhesives, other means may be used to create a seal. For instance, if a hot-seal adhesive is used, heat will be applied to the sealing areas instead of, or in addition to, pressure.

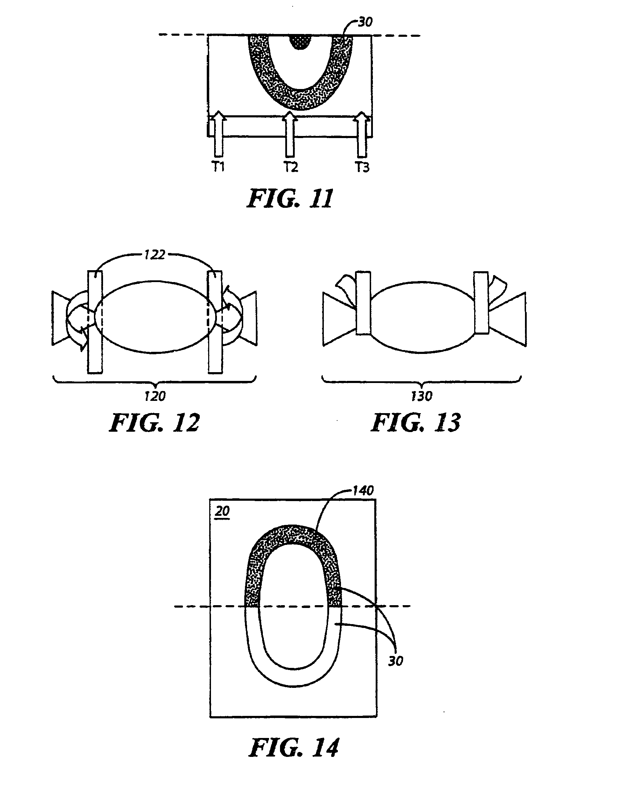

Referring again to FIG. 1, the discrete sheet is twisted 16 in at least one area that includes the adhesive. The areas with adhesive are referred to as twisting areas, and are shown in FIG. 11 as T1, T2, and T3. The discrete sheet 20 is twisted in at least one twisting area. Any one twisting area may be used to form a mono-twist, while twisting areas T1 and T3 may used to form a double-twist. The twisting areas utilized relate to which sealing area is employed. For instance, by one approach, a cold-seal adhesive may be applied in a pattern 30, and pressure applied to sealing area C. Since a seal has formed at sealing area C, twisting area T2 may no longer be utilized for a twist, Instead, twisting areas T1 and T3 may be used to form a double-twist, as shown in FIG. 12. If second additional areas of adhesive 62 are present, the pressure applied during twisting will create additional sealing areas, thus enhancing the twisting process.

By one approach, as described above, the discrete sheet is comprised of a material with dead fold properties. The dead fold characteristics of the discrete sheet 20 also aid in retaining the twisted shape after twisting. Additionally, the pressure applied during twisting of areas T1 and T3 further forms a seal around the edible substance 60 contained within the discrete sheet. The result is the twisted, sealed wrapper 120 of FIG. 12.

Referring again to FIG. 1, one or more ties may optionally be twisted 17 about the area(s) that is/are twisted. FIG. 12 also illustrates the optional tie(s) 122. The ties 122 may be any closure typically used in the art. This may include the traditional twist tie (i.e., a short length of wire encased in a strip of plastic, paper, or foil), bows, ribbons, or other fasteners. The tie(s) 122 may be looped, knotted, twisted, or otherwise affixed to the mono- or double-twist. The tie(s) 122 may further seal the wrapper, act as an indicator of tampering, be purely decorative, or a combination of one or more of these functions. As seen in FIG. 12, ties 122 may be affixed to the twists of twisting areas T1 and T3, resulting in a tied, twisted, sealed wrapper 130 of FIG. 13.

In use, a consumer may remove the ties (if present) and untwist the one or more twisted areas. The consumer may then grasp the excess portion and peel apart the adhesive to access the edible substance sealed within the wrapper. The excess portion allows a consumer to easily grasp the wrapper and open it without destroying the wrapper. This in turn allows a consumer to reclose the wrapper, if desired.

In a particular illustrative approach, the adhesive used may aid the opening process and allow a consumer to reclose the wrapper. Certain adhesives are more easily peeled apart than others. At the same time, certain adhesives and primers may be utilized such that the wrapper may be reclosed after initial opening. By one approach, a pattern of adhesive 30 is applied to the discrete sheet 20, and a primer is applied to half of the pattern of adhesive 140, as shown in FIG. 14. The primer facilitates a cohesive split when the wrapper is initially opened. A cohesive split results in half of the cold seal adhesive remaining on each side of the flexible film. If and when the wrapper is reclosed, the two halves of adhesive will contact and bind to each other with enough strength to keep the wrapper shut. However, a lesser force will be needed to reopen the package (as described above, the reclosability and amount of force needed to open the wrapper may be varied). In contrast, an adhesive split occurs when all of the adhesive remains on one side of the flexible film. In that case, the wrapper will not adequately reclose as the adhesive will not stick to the film again.

While total hermeticity will typically no longer exist once a wrapper is opened, the closure obtained from the adhesive re-sticking and from re-twisting the ends is such that it prevents a substantial amount of moisture and air from negatively affecting the edible substance. In addition, by one the approach, the apparatus may be configured such that once it has been opened and reclosed, the amount of force required to re-open the apparatus is noticeably less than the initial force. This may be used to indicate to the consumer that tampering may have occurred and the integrity of the edible substance may be compromised.

So configured, edible substances may be wrapped and offered to consumers such that they closely resemble the traditional packaging look associated with such edible substances. At the same time, costs are reduced since existing technology may be used, and smaller amounts of adhesive are needed. The hermetic seal created around each individual piece of edible substance improves shelf life while also reducing costs, since non-barrier materials may be used for secondary packaging (i.e., boxes or bags holding the individually wrapped pieces). Despite the hermetic seal, the wrapper is easily opened by the consumer without ripping or destroying the wrapper. At the same time, an adhesive may be used such that a cohesive split occurs when the wrapper is initially opened. The cohesive nature of the split allows the wrapper to be reclosed. It also may be used as tamper evidence for individually-wrapped pieces. In either case, the consumer may save the wrapper for sentimental or other reasons, or reclose the wrapper after inspecting or consuming part of the edible substance.

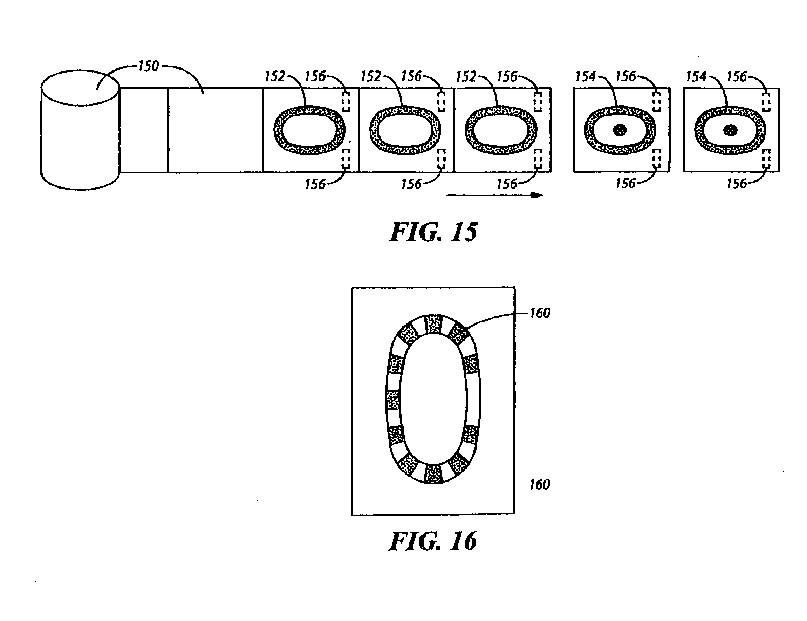

Those skilled in the art will recognize that a wide variety of modifications, alterations, and combinations can be made with respect to the above described embodiments without departing from the spirit and scope of the invention, and that such modifications, alterations, and combinations are to be viewed as being within the ambit of the inventive concept. For example, the method described may be streamlined into a continuous method for a larger production. With reference to FIG. 15, a continuous sheet or roll of flexible film 150 is provided. Moving away from the roll, a plurality of adhesive patterns 152 may be disposed on the sheet. The plurality of adhesive patterns may be applied in discrete patterns, such that one pattern is not connected to the next. The continuous sheet may be singulated into discrete sheets 154. Registration marks 156 may also optionally be used as part of the design print to automate and facilitate the singulating process. Singulating may occur before or after the edible substance is disposed within the adhesive-free area. The process may then continue as described above for each singulated, discrete sheet.

In another illustrative modification, the pattern of adhesive 30 may be applied as segments 160, as shown by FIG. 16. The segmented nature of the adhesive allows a seal to form with a controlled hermeticity. This may be useful in applications where it is desirable to allow a controlled amount of moisture and/or air (and carbon dioxide) to flow in and out of the package.
The following paragraphs describe further embodiments of the apparatus and method according to the present invention and it is noted that the features of any paragraphs can be combined with each other as long as they do not contradict each other.
1. An apparatus comprising:
   an edible substance;
   a discrete sheet of flexible film;
   an adhesive disposed on the flexible film in a pattern that surrounds an adhesive-free space that is sized to accommodate the edible substance, wherein the adhesive does not extend to at least one edge of the flexible film;
      wherein:
      portions of the adhesive contact other portions of the adhesive such that the discrete sheet encapsulates the edible substance; and
      the discrete sheet is twisted in at least one area that includes the adhesive.
2. The apparatus of 1 wherein the edible substance comprises a bon-bon.
3. The apparatus of 1 wherein the flexible film comprises a barrier film with a high level of impermeability.
4. The apparatus of 1 wherein the adhesive comprises a cold-sealing adhesive.
5. The apparatus of 1 wherein the adhesive comprises means for adhesively cold sealing the discrete sheet.
6. The apparatus of 1 wherein the pattern is at least partially arcuate,
7. The apparatus of 6 wherein the pattern is substantially oval shaped.
8. The apparatus of 1 wherein the adhesive does not extend to any edge of the flexible film.
9. The apparatus of 1 wherein the discrete sheet is twisted in at least two areas that include the adhesive.
10. The apparatus of 9 wherein the discrete sheet is twisted on opposing sides of the edible substance.
11. The apparatus of 1 further comprising a tie disposed about the area that is twisted.
12. The apparatus of 1 wherein the discrete sheet does not have a tearing aid along any peripheral edge.
13. The apparatus of 1 wherein the discrete sheet is folded about the edible substance to form a folded edge.
14. The apparatus of 13 wherein the discrete sheet is dead folded about the edible substance to form the folded edge.
15. The apparatus of 13 wherein outer edges of the discrete sheet that are opposite the folded edge overlap unevenly to thereby facilitate opening the apparatus using human fingers.
16. The apparatus of 1 wherein the adhesive comprises a reclosable adhesive that permits a user to reclose the discrete sheet about the edible substance.
17. The apparatus of 1 wherein the discrete sheet hermetically encapsulates the edible substance.
18. A method comprising:
   providing a discrete sheet of flexible film;
   disposing on the discrete sheet an adhesive in a pattern that surrounds an adhesive-free space, wherein the adhesive does not extend to at least one edge of the flexible film;
   disposing an edible substance within the adhesive-free space;
   manipulating the discrete sheet to dispose the discrete sheet about the edible substance; and
   using the adhesive to seal the discrete sheet to thereby encapsulate the edible substance within the discrete sheet.
19. The method of 18, wherein using the adhesive to seal the discrete sheet to thereby encapsulate the edible substance within the discrete sheet comprises providing pressure to at least a portion of the adhesive.
20. The method of 19, wherein providing pressure to at least a portion of the adhesive comprises providing room-temperature pressure to the adhesive.
21. The method of 18, wherein providing a discrete sheet of flexible film and disposing on the discrete sheet an adhesive in a pattern that surrounds an adhesive-free space, wherein the adhesive does not extend to at least one edge of the flexible film comprises:
   providing a continuous sheet;
   disposing a plurality of the patterns on the continuous sheet; and
   singulating the Continuous sheet to provide the discrete sheet.
22. The method of 21, wherein disposing a plurality of the patterns on the continuous sheet comprises applying the adhesive in discrete patterns along the continuous sheet.
23. The method of 18 further comprising:
   twisting the discrete sheet in at least one area that includes the adhesive.
24. The method of 23 wherein twisting the discrete sheet in at least one area that includes the adhesive comprises twisting the discrete sheet in at least two areas that include the adhesive.
25. The method of 24 wherein twisting the discrete sheet in at least two areas that include the adhesive comprises twisting the discrete sheet on opposing sides of the edible substance.
26. The method of 24 further comprising tying a tie about the area that is twisted.
27. The method of 18, wherein the edible substance comprises a bon-bon.

## Claims

1. An apparatus comprising:
an edible substance;
a discrete sheet of flexible film;
an adhesive disposed on the flexible film in a pattern that surrounds an adhesive-free space that is sized to accommodate the edible substance, wherein the adhesive does not extend to at least one edge of the flexible film;
wherein:
portions of the adhesive contact other portions of the adhesive such that the discrete sheet encapsulates the edible substance; and the discrete sheet is twisted in at least one area that includes the adhesive.

2. The apparatus of claim 1 wherein the adhesive comprises a cold-sealing adhesive.

3. The apparatus of claim 1 or 2 wherein the pattern is at least partially arcuate.

4. The apparatus of claim 3 wherein the pattern is substantially oval shaped.

5. The apparatus of one of the preceding claims wherein the adhesive does not extend to any edge of the flexible film.

6. The apparatus of one of the preceding claims wherein the discrete sheet is twisted in at least two areas that include the adhesive.

7. The apparatus of one of the preceding claims wherein the discrete sheet does not have a tearing aid along any peripheral edge.

8. The apparatus of one of the preceding claims wherein the discrete sheet is folded about the edible substance to form a folded edge.

9. The apparatus of claim 8 wherein outer edges of the discrete sheet that are opposite the folded edge overlap unevenly to thereby facilitate opening the apparatus using human fingers.

10. The apparatus of one of the preceding claims wherein the adhesive comprises a reclosable adhesive that permits a user to reclose the discrete sheet about the edible substance.

11. A method comprising:
providing a discrete sheet of flexible film;
disposing on the discrete sheet an adhesive in a pattern that surrounds an adhesive-free space, wherein the adhesive does not extend to at least one edge of the flexible film;
disposing an edible substance within the adhesive-free space;
manipulating the discrete sheet to dispose the discrete sheet about the edible substance; and
using the adhesive to seal the discrete sheet to thereby encapsulate the edible substance within the discrete sheet.

12. The method of claim 11, wherein using the adhesive to seal the discrete sheet to thereby encapsulate the edible substance within the discrete sheet comprises providing pressure to at least a portion of the adhesive.

13. The method of claim 12, wherein providing pressure to at least a portion of the adhesive comprises providing room-temperature pressure to the adhesive.

14. The method of one of claims 11 to 13, wherein providing a discrete sheet of flexible film and disposing on the discrete sheet an adhesive in a pattern that surrounds an adhesive free space, wherein the adhesive does not extend to at least one edge of the flexible film comprises:
providing a continuous sheet;
disposing a plurality of the patterns on the continuous sheet; and
singulating the continuous sheet to provide the discrete sheet.

15. The method of claim 14 further comprising:
twisting the discrete sheet in at least one area that includes the adhesive.
